# EUROPEAN PATENT APPLICATION

(11) **EP 1 956 839 A1**
(43) Date of publication of application: **13.08.2008**
(21) Application number: 06833451.5
(22) Date of filing: 28.11.2006
(51) Int. Cl.: H04N 5/91, H04N 5/225, H04N 5/93

(54) **RECORDING DEVICE, REPRODUCTION DEVICE, RECORDING METHOD, RECORDING PROGRAM, AND COMPUTER-READABLE RECORDING MEDIUM**

(30) Priority: 29.11.2005 JP 2005343026
(71) Applicant: Pioneer Corporation, Tokyo 153-8654 (JP)
(72) Inventor: IWAMURA, Hiroshi, c/o Corporate Research, Saitama 350-2288 (JP); SUGIHARA, Motooki, c/o Corporate Research, Saitama 350-2288 (JP); YAMAZAKI, Hiroshi, c/o Corporate Research, Saitama 350-2288 (JP); MORIYAMA, Yoshiaki, c/o Corporate Research, Saitama 350-2288 (JP)
(74) Representative: Haley, Stephen
(86) International application number: PCT/JP2006/323647
(87) International publication number: WO 2007/063819

(57) **Abstract**

In a recording apparatus, a high-speed camera (301) continuously shoots a series of images at a high shutter speed. Next, an MV calculating unit (303) calculates motion vectors, based on a sequential relationship of the series of images shot by the high-speed camera (301). Then, a recorder (307) records the images shot by the high-speed camera (301), together with the motion vectors corresponding to the images. On the other hand, in a reproducing apparatus, the series of images recorded by the recorder (307) are reproduced, with the motion vectors recorded by the recording apparatus added thereto.

## Description

### TECHNICAL FIELD

The present invention relates to a recording apparatus, a reproducing apparatus, a recording method, a recording program, and a computer-readable recording medium, for shooting and recording a video. However, application of the present invention is not limited to the recording apparatus, the reproducing apparatus, the recording method, the recording program, and the computer-readable recording medium above.

### BACKGROUND ART

Ordinary picture taking utilizes a shutter speed that is higher than that of video shooting, an object of which is to control blurring caused by motion such as that of a subject or the photographer's hand, and to obtain good still-image quality, a rather high shutter speed is required in many cases. However, when shooting moving images, conversely, the shutter speed must be so low that each frame may include motion caused blurring since a moving image without motion caused blurring appears as unsmooth, intermittent motion to human eye. For this reason, in CG animation, etc., processing is performed to purposely add motion blur (motion caused blurring) to each frame.

Although shooting with a low shutter speed enables a smoothly moving image to be shot, a still image with little motion blur cannot be shot. Meanwhile, shooting with the high shutter speed enables a still image with little motion blur to be shot; however, when reproduced as a moving image, the motion appears intermittent and unnatural. Therefore, an attempt to realize a function of shooting a moving image and a still image simultaneously leads to a problem in that when priority is given to smooth motion in the moving image, only a still image with motion blur can be obtained and when priority is given to the image quality of a still image, the smoothness of the motion in the moving image is lost.

There is a conventional technology of obtaining matching between frames by using a low-resolution, high-speed camera in addition to a camera of ordinary resolution (see, for example, Patent document 1). There is also a conventional technology of obtaining natural image quality by adding a residual image at the time of reproduction (see, for example, Patent document 2).

Patent document 1: Japanese Patent Application Laid-Open Publication No. 2003-203237
Patent document 2: Japanese Patent Application Laid-Open Publication No. H5-268515

### DISCLOSURE OF INVENTION

### PROBLEM TO BE SOLVED BY THE INVENTION

However, the conventional technology in Patent document 1 requires a low-resolution, high-speed camera in addition to an ordinary (high-resolution) camera and has no block for adding motion blur. An object of this technology is to accurately seek corresponding points between frames (=to seek a motion vector) and the high-speed camera image in this case is used only for the purpose of obtaining matching. The technology, using the matching information obtained by the low-resolution, high-speed camera image or known information concerning corresponding points as a constraint, seeks the corresponding points on the high-resolution images. Namely, the technology is not intended for simultaneous shooting of the still image and the moving image.

The conventional technology in Patent document 2 seeks a motion vector at the time of reproduction to add a residual image and has a problem in that a highly accurate motion vector may not be obtained and the cost of a reproducer is increased.

### MEANS FOR SOLVING PROBLEM

A recording apparatus according to the invention of claim 1 includes a shooting unit that continuously shoots a series of images at a high shutter speed; a calculating unit that calculates motion vectors based on a sequential relationship of the series of images shot by the shooting unit; and a recording unit that records the series of images shot by the shooting unit together with the motion vectors corresponding to the images.

A recording apparatus according to the invention of claim 8 includes a shooting unit that continuously shoots a series of images at a high shutter speed; a calculating unit that calculates motion vectors based on a sequential relationship of the series of images shot by the shooting unit; an adding unit that obtains motion blur based on the motion vectors calculated by the calculating unit and adds the motion blur to the series of images shot by the shooting unit; and a recording unit that records the series of images having the motion blur added thereto by the adding unit.

A reproducing apparatus according to the invention of claim 16 reproduces a series of images recorded by the recording apparatus according to any one of claims 1 to 7 and includes an adding unit that adds motion blur based on motion vectors recorded by the recording apparatus to the series of images recorded by the recording apparatus.

A reproducing apparatus according to the invention of claim 20 reproduces a series of images recorded by the recording apparatus according to any one of claims 1 to 7 and claims 9 to 15, and includes a grouping unit that groups the motion vectors recorded by the recording apparatus; and a processing unit that performs processing by object, the object corresponding to the grouped motion vectors.

A reproducing apparatus according to the invention of claim 21 reproduces a series of images recorded by the recording apparatus according to claim 7 and includes a first reproducing unit that reproduces a still image recorded by the recording apparatus; and a second reproducing unit that reproduces the series of images recorded by the recording apparatus as a moving image, by adding thereto motion blur based on the motion vectors recorded by the recording apparatus.

A reproducing apparatus according to the invention of claim 22 reproduces a series of images recorded by the recording apparatus according to claim 15 and includes a first reproducing unit that reproduces a still image recorded by the recording apparatus; and a second reproducing unit that reproduces the series of images recorded by the recording apparatus as a moving image.

A recording method according to the invention of claim 23 includes a shooting step of continuously shooting a series of images at a high shutter speed; a calculating step of calculating motion vectors based on a sequential relationship of the series of images shot at the shooting step; and a recording step of recording the series of images shot at the shooting step together with the motion vectors corresponding to the images.

A recording method according to the invention of claim 24 includes a shooting step of continuously shooting a series of images at a high shutter speed; a calculating step of calculating motion vectors based on a sequential relationship of the series of images shot at the shooting step; an adding step of obtaining motion blur based on the motion vectors calculated at the calculating step and adding the motion blur to the series of images shot at the shooting step; and a recording step of recoding the series of images having the motion blur added thereto at the adding step.

A recording program according to the invention of claim 25 causes a computer to execute the recording method according to claim 23 or 24.

A computer-readable recording medium according to the invention of claim 26 stores therein the recording program according to claim 25.

### BRIEF DESCRIPTION OF DRAWINGS

Fig. 1 is a block diagram of a functional configuration of a recording apparatus without motion blur according to an embodiment of the present invention;
Fig. 2 is a block diagram of a functional configuration of the recording apparatus with the motion blur according to the embodiment of the present invention;
Fig. 3 is a block diagram of a functional configuration of a reproducing apparatus according to an embodiment of the present invention;
Fig. 4 is a flow chart of recording processing without the motion blur;
Fig. 5 is a flow chart of reproduction processing of a signal recorded without the motion blur;
Fig. 6 is a flow chart of the recording processing with the motion blur;
Fig. 7 is a block diagram of a configuration of the recording apparatus that records video by thinning out frames;
Fig. 8 is a block diagram of the configuration of the recording apparatus that thins out the frames, integrates the motion vectors accordingly, encodes the integrated motion vector, and records the encoded motion vector together with the video;
Fig. 9 is a block diagram of the recording apparatus with the frame thinning, the MV consolidation, and the motion blur;
Fig. 10 is a block diagram of the recording apparatus that multiplexes and records the motion vector integrated by the MV integrating unit;
Fig. 11 is a block diagram of a configuration of the recording apparatus that records the video after resolution converting processing;
Fig. 12 is a block diagram of a configuration of the recording apparatus using a still-image recording shutter;
Fig. 13 is a block diagram of a configuration of the recording apparatus that is capable of encoding the moving image having compatibility with the conventional reproducing system;
Fig. 14 is a block diagram of the reproducing apparatus that executes frame interpolation processing;
Fig. 15 is a block diagram of the reproducing apparatus that executes motion vector interpolating processing;
Fig. 16 is a block diagram of a configuration of the reproducing apparatus that realizes high-definition, slow reproduction;
Fig. 17 is a block diagram of a configuration of the reproducing apparatus that realizes reproduction by object;
Fig. 18 is a block diagram of the reproducing apparatus corresponding to the recording apparatus that does not have the motion-blur adding unit and encodes the still image by a separate encoder and multiplexes;
Fig. 19 is a block diagram of the reproducing apparatus corresponding to the recording apparatus that has the motion-blur adding unit and encodes the still image by the separate encoder and multiplexes;
Fig. 20 is a block diagram of the configuration of the recording apparatus as applied to a DVD video camera or an HDV camera; and
Fig. 21 is a block diagram of the configuration of the recording apparatus as applied to a DV camera.

### EXPLANATIONS OF LETTERS OR NUMERALS

301 high-speed camera
302 memory
303 MV calculating unit
304 video encoder
305 MV encoder
306 multiplexer
307 recorder
401 reproducer
402 demultiplexer
403 video decoder
404 MV decoder
405 motion-blur adding unit
406 still-image output unit
407 moving-image output unit

### BEST MODE(S) FOR CARRYING OUT THE INVENTION

With reference to accompanying drawings, detailed description will be made of preferred embodiments of a recording apparatus, a reproducing apparatus, a recording method, a recording program, and a computer-readable recording medium according to the present invention.

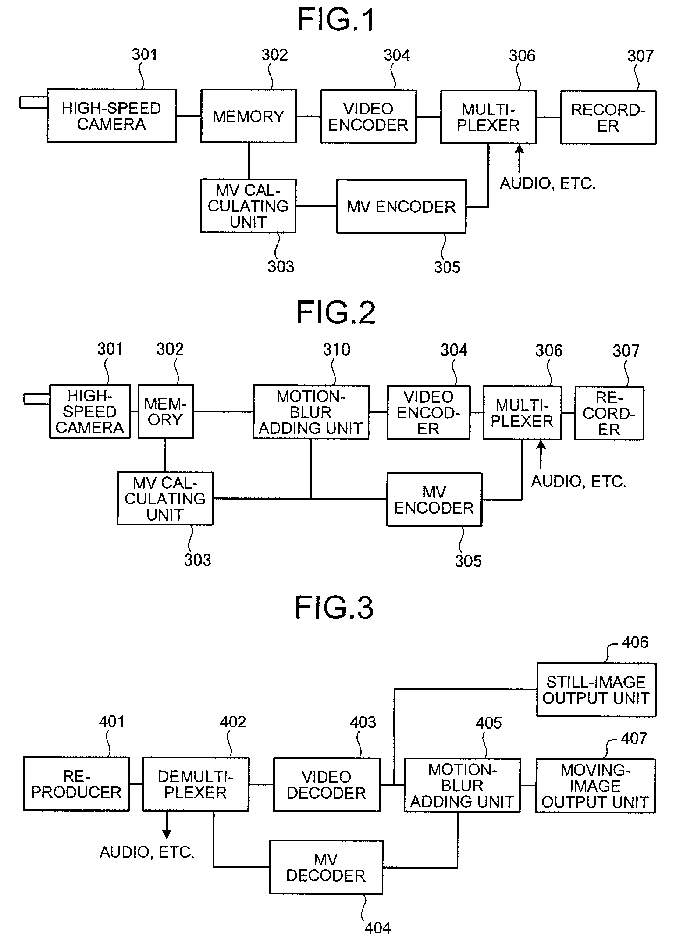

Fig. 1 is a block diagram of a functional configuration of the recording apparatus without motion blur according to the embodiment of the present invention. This recording apparatus includes a high-speed camera 301, a memory 302, an MV calculating unit 303, a video encoder 304, an MV encoder 305, a multiplexer 306, and a recorder 307. Motion blur means blurring of an image such as a residual image that occurs with a moving object and hereinafter, is expressed as motion blur or motion caused blurring.

The high-speed camera 301 is a camera that shoots at a shutter speed higher than that of an ordinary camera. Here, "higher speed" means a shutter speed that enables obtaining a clear still image with little blurring of the subject and a shutter speed at which the still images, when directly reproduced in continuous mode as a moving image, appear as an intermittent, unnatural motion. The shutter speed has nothing to do with frame rate except that the shutter speed is higher than the frame rate. For example, at the frame rate of 30 frames per second, the shutter speed may be 1/60 second, 1/250 second, or 1/1000 second.

The memory 302 records the images shot by the high-speed camera 301. The images recorded in the memory 302 are sent to the MV calculating unit 303 and the video encoder 304. The MV calculating unit 303 calculates a motion vector between the images read out from the memory 302. The calculated moving vector is input to the MV encoder 305.

The video encoder 304 encodes image information recorded in the memory 302 as video information. The encoded video information is output to the multiplexer 306. The MV encoder 305 encodes the motion vector calculated by the MV calculating unit 303. The encoded video information and the encoded motion vector are output to the multiplexer 306.

The multiplexer 306 multiplexes the encoded information. The multiplexed information is recorded by the recorder 307. The memory 302, the MV calculating unit 303, the video encoder 304, the MV encoder 305, the multiplexer 306, and the recorder 307 can be realized by a CPU reading out a program recorded in a ROM and using a RAM as a work area.

With the above configuration, shooting is performed using the high-speed shutter, the motion vector (MV) is detected, and each frame image and the motion vector are recorded. Shooting with the high-speed shutter enables a sharp still image with little motion blur to be obtained and a highly accurate motion vector is estimated therefrom.

If a scheme utilizing motion information, such as MPEG, is used as the video encoding scheme, configuration may be such that the motion vector calculated by the MV calculating unit 303 is input to the video encoder 304 and the video encoder 304 obtains the motion information necessary for the video encoding from the motion vector. In this case, the motion information necessary for video decoding is multiplexed into the video encoded data.

Further, configuration may be such that the motion information in the video encoded data above is used as a motion vector on the reproducing side. In such a case, the MV encoder 305 is unnecessary and the encoded motion vector is not multiplexed at the multiplexer.

Fig. 2 is a block diagram of a functional configuration of the recording apparatus with the motion blur according to the embodiment of the present invention. This recording apparatus has the configuration of the recording apparatus without the motion blur shown in Fig. 1 and further includes a motion-blur adding unit 310 between the memory 302 and the video encoder 304 to accept input from the MV calculating unit 303.

The motion-blur adding unit 310 reads out video recorded in the memory 302, calculates the motion blur from the motion vector obtained at the MV calculating unit 303, and adds the calculated motion blur to the video read out. The video with the motion blur added thereto is output to the video encoder 304 in the same manner as in Fig. 1 and the encoded video and the motion vector are processed in the same manner as in Fig. 1.

By the above configuration, shooting is performed using the high-speed shutter, the motion vector (MV) is detected, and the video to which the motion blur calculated from the motion vector is added can be recorded together with the original motion vector.

As in the case of Fig. 1, if a scheme utilizing motion information, such as MPEG, is used as the video encoding scheme, configuration may be such that the motion vector calculated by the MV calculating unit 303 is input to the video encoder 304 and the video encoder 304 obtains the motion information necessary for the video encoding from the motion vector. In this case, like the case of Fig. 1, the motion information necessary for video decoding is multiplexed into the video encoded data.

As in the case of Fig. 1, configuration may be such that the motion information in the video encoded data above is used as a motion vector on the reproducing side. In such case, the MV encoder 305 is unnecessary and the encoded motion vector is not multiplexed at the multiplexer. Also when it is assumed that the motion vector is not used other than at the video decoder in the reproducing apparatus, the motion vector does not need to be multiplexed at the multiplexer 306 and therefore, the MV encoder 305 is unnecessary.

Fig. 3 is a block diagram of a functional configuration of the reproducing apparatus according to the embodiment of the present invention. This reproducing apparatus includes a reproducer 401, a demultiplexer 402, a video decoder 403, an MV decoder 404, a motion-blur adding unit 405, a still-image output unit 406, and a moving-image output unit 407. This reproducing apparatus is capable of decoding and reproducing video by receiving the video encoded by the recording apparatus shown in Fig. 1.

The reproducer 401 reproduces the encoded video and the encoded motion vector in a multiplexed state. The demultiplexer 402 demultiplexes the encoded video and the encoded motion vector and inputs the encoded video and the encoded motion vector to the video decoder 403 and the MV decoder 404, respectively. The demultiplexer 402 outputs audio, etc.

The video decoder 403 decodes the encoded video. The decoded video is output to the motion-blur adding unit 405 and the still-image output unit 406. The MV decoder 404, upon input from the demultiplexer 402, decodes the motion vector. The motion-blur adding unit 405, upon input of the decoded motion vector, prepares the video including the motion blur from the video decoded by the video decoder 403.

In this manner, the motion blur is added using the motion vector at the time of reproduction. Namely, by adding the motion blur to the still image obtained at the time of recording, using the motion vector obtained at the time of recording, a moving image with smooth motion is obtained simultaneously. The motion vector indicates the direction of movement and the distance of movement of an area with respect to a difference between a reference image and a current image concerning a certain image. Use of the motion vector enables the motion blur of the image to be obtained, at the time of reproduction, from the motion vector with respect to the area that moved.

The reproducing apparatus described above enables reading out of the calculated motion vector at the time of reproduction, from the video recorded together with the motion vector with respect to a series of images shot and as a result, enables smooth reproduction of the video according to the motion blur that can be obtained from the motion vector. Therefore, on the reproducing side, from the same data, a series of images shot can be reproduced as sharp still images without motion blur or as smoothly moving images.

In the reproducing apparatus corresponding to the recording apparatus with the motion blur of Fig. 2, since it is not necessary to add the motion blur on the reproduction side and as a still image without the motion blur cannot be reproduced from the video decoder 403, the motion-blur adding unit 405 and the still-image output unit 406 are removed from the reproducing apparatus of Fig. 3. When the motion vector is not used on the reproduction side, the MV decoder 404 as well is unnecessary.

Next, description is made of an example of a "high-speed" shutter speed setting method. While a "high-speed" shutter speed is required to accurately determine the motion vector, the speed differs depending on the speed of movement of the subject within the video. Accordingly, a conceivable method is to estimate the speed of movement within the video, determine the shutter speed from the estimated amount of movement, and feed it back.

The necessary shutter speed is approximated also by the type of subject, the scene to be shot, etc. Accordingly, configuration may be such that, for example, a mode setting dial is provided for a user to set the mode before the shooting and a reference value is set for each mode, such as 1/250 for scenery and a slow moving subject, 1/1000 for an athletic game, etc., and 1/10000 for motor sports, etc. The shutter speed to be actually used is ultimately determined by taking into account brightness of the subject, shooting sensitivity, aperture, etc. with respect to the reference value.

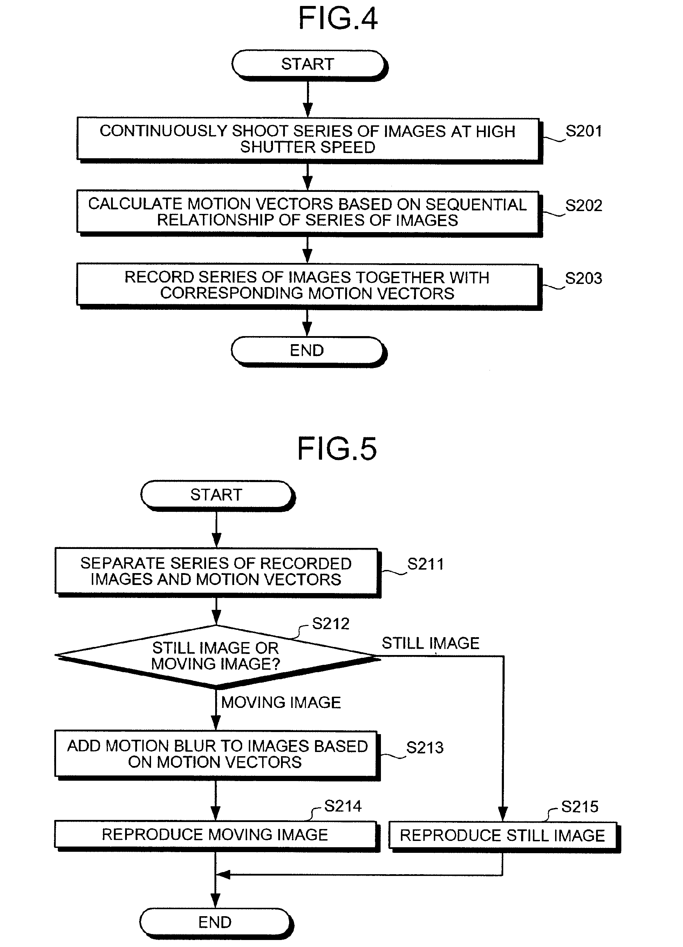

Fig. 4 is a flow chart of recording processing without the motion blur. First, a series of images are continuously shot at the high shutter speed (step S201). Next, the motion vector is obtained based on a sequential relationship of the series of images shot (step S202). Then, the series of images shot are recorded together with the motion vectors corresponding to the images (step S203) and a sequence of processing is ended. By the processing above, shooting is performed using the high-speed camera, the motion vector (MV) is detected, and each frame image and the motion vector are recorded.

Fig. 5 is a flow chart of reproduction processing of a signal recorded without the motion blur. First, a series of images recorded by the recording apparatus and a motion vector recorded by the recording apparatus are separated (step S211). Next, it is determined whether the series of images are still images or a moving image (step S212).

In the case of a moving image (step S212: moving image), motion blur is added based on the separated motion vector (step S213) and the moving image is reproduced (step S214). In the case of still images (step S212: still image), the still images are reproduced (step S215). Namely, the separated images are directly output.

By the reproduction processing above, based on the video recorded together with the motion vector with respect to the series of images shot, sharp still images without motion blur and smoothly moving video with motion blur added thereto may be reproduced simultaneously.

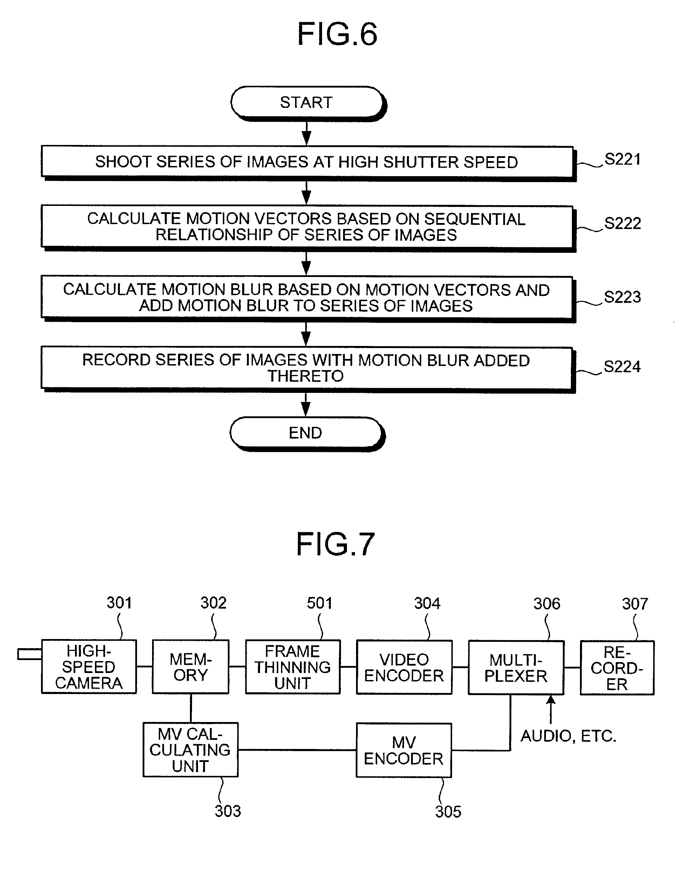

Fig. 6 is a flow chart of the recording processing with the motion blur. First, a series of images are continuously shot at the high shutter speed (step S221). Next, the motion vector is obtained based on the sequential relationship of the series of images shot (step S222). Then, the motion blur is obtained based on the motion vector and the obtained motion blur is added to the series of images (step S223).

Then, the series of images with the motion blur added thereto are recorded (step S224), thereby ending a sequence of processing. By the processing above, shooting is performed using the high-speed shutter, the motion vector (MV) is detected, and the video to which the motion blur based on the motion vector is added can be recorded together with the original motion vector.

In this manner, according to the embodiments of the present invention described with reference to Figs. 1 to 6, a still image with little blurring and a smoothly moving image can be recorded or reproduced simultaneously. Namely, the use of the high-speed camera 301 enables the shooting of a still image, while the motion vector obtained from a large number of still images shot at the high speed enables generation of motion blur. As a result, moving images with smooth motion can be reproduced even from a large number of still images shot at the high speed.

Since the calculation of the motion vector, which typically requires a large amount of calculation, is performed on the recording side, the cost of the reproducer 401 may be kept low. According to the embodiment of the present invention described by Fig. 2, by adding the motion blur using the highly accurate motion vector on the recording side, the addition of the motion blur on the reproducing side becomes unnecessary, video encoding having high image quality may be performed retaining compatibility with a conventional reproducing system, and the highly accurate motion vector can be utilized on the reproducing side.

The use of the high-speed camera 301 enhances accuracy in the detection of the motion vector. The shutter speed used for ordinary moving image shooting, producing much motion blur, is not suitable for still images and at the same time, does not allow detection of the motion vector with high accuracy since the shape of an object varies between a frame with much motion blur and a frame with little motion blur.

In contrast, since the image shot with the high-speed camera 301 has little motion blur, each frame is a still image of high image quality and the motion of an object may be detected with high accuracy from a correlation between the frames. A moving image in which each frame has no motion blur appears as unnatural motion to the eye but may be reproduced as a moving image with smooth motion by adding the motion blur according to the direction of motion and the amount of motion indicated by the motion vector at the time of reproduction.

A particular video/audio encoding scheme is not required; however, if, for example, common MPEG motion compensation predicting encoding is used for video encoding, since generation of the motion information to be used for encoding is based on the motion vector as described above, the motion vector is detected with high accuracy, prediction residual becomes small and the volume of codes generated may be kept low. Therefore, as compared with the case of ordinary MPEG encoding, there is an advantage in that higher image quality may be obtained at the same bit rate and longer recording may be performed with the same degree of image quality.

### Examples

In the above embodiments of the present invention, description has been made of the recording apparatus with and without the motion blur, the reproducing apparatus corresponding thereto, and the processing respectively thereof. Here, description is made of application examples and variation examples of the recording apparatus and the reproducing apparatus described in such embodiments of the present invention.

Fig. 7 is a block diagram of a configuration of the recording apparatus that records video by thinning out frames. The recording apparatus shown in Fig. 7 includes a frame thinning unit 501 added between the memory 302 and the video encoder 304 in the recording apparatus shown in Fig. 1. The high-speed camera 301 is one that not only has the high shutter speed but is capable of also shooting at a high-speed frame rate that is higher than that of ordinary video reproduction.

The frame thinning unit 501 performs frame thinning processing on video read out from the memory 302. Namely, after each frame has been used to acquire a necessary portion of the motion vectors at the MV calculating unit 303, unnecessary frames are thinned out and only the frames that remain are output to the video encoder 304. Then, in the same way as in Fig. 1, the encoded video and the motion vector are processed.

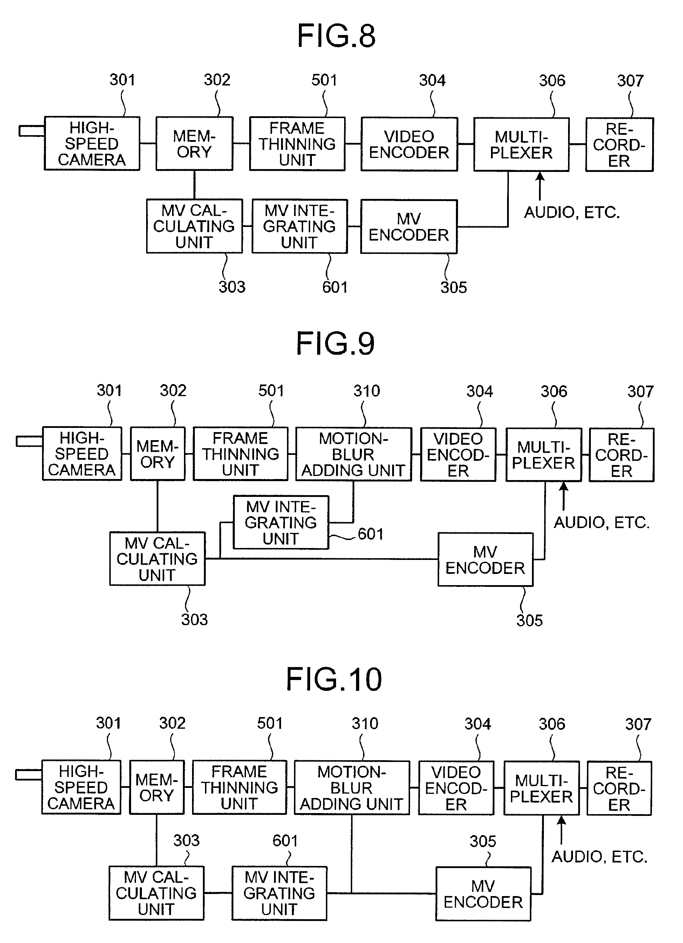

Fig. 8 is a block diagram of the configuration of the recording apparatus that thins out the frames, integrates the motion vectors accordingly, encodes the integrated motion vector, and records the encoded motion vector together with the video. This recording apparatus has the configuration of the recording apparatus shown in Fig. 7 and further includes an MV integrating unit 601.

The MV integrating unit 601 integrates the motion vectors calculated by the MV calculating unit 303. The integrated motion vector is output to the video encoder 304 and the MV encoder 305. The video encoder encodes the video according to the thinned-out frames. The MV encoder 305 encodes the integrated motion vector. The encoded video and the encoded motion vector are multiplexed by the multiplexer 306 and recorded by the recorder 307.

In calculating the motion vector, when a shape change is involved between the frames, matching cannot be obtained by block matching used in MPEG, etc. Although there is a method of calculating the movement vector of a characteristic point from a pixel-by-pixel optical flow to cope with the shape change, matching can not be obtained when the amount of motion is large or a change in brightness is also involved. Therefore, it becomes difficult to accurately calculate the motion vector in such case.

According to the recording apparatus described above, if the shooting is performed at a frame rate that is faster than that of the ordinary video shooting, the shape change and the amount of movement between the frames become smaller and therefore, the motion vector and the movement vector of the characteristic point may be calculated with high accuracy. After obtaining the motion vectors, the frames are thinned out to a frame rate suitable for the ordinary reproduction and the motion vectors are integrated accordingly. In spite of the high-speed and large-volume shooting, the thinning-out of the frames enables reduction of the actual data volume to a requisite minimum. At the time of reproduction, to prevent unnatural motion, motion blur is added according to the direction of motion and the amount of motion indicated by the motion vector. Therefore, the data volume need not be largely increased and the accuracy may be enhanced with respect to the motion blur.

Namely, by shooting at a frame rate faster than that of the ordinary video shooting, the amount of movement of the object between the frames becomes smaller and therefore, the motion vector may be calculated with high accuracy. By thinning out the frames after the high-speed shooting and the calculation of the motion vector, the motion vector can be obtained with high accuracy without largely increasing the data volume. This is particularly effective, for example, in the case of obtaining the optical flow that is difficult to estimate when the amount of movement is large or the illumination change is great.

Configuration may be such that, as in Fig. 7, without integration, the motion vectors corresponding to the high-speed frame rate are encoded and multiplexed. Since this enables frame interpolation directly using the motion vector corresponding to the high-speed frame rate at the reproducing apparatus, slow reproduction may be performed with further enhanced definition. In this case, the data volume of the motion vector increases, but it has no large effect since the data volume of the motion vector is small as compared with that of the video data.

Also, configuration may be such that the frame thinning is performed so that the frame rate is slower than the ordinary frame rate, the frame interpolation is performed using the motion vector at the reproducing apparatus, and reproduction is performed at the ordinary frame rate. In the present embodiment, because of the high accuracy of the motion vector, even if a reduced volume of video data is recorded as described above, a good moving image can be reproduced at the reproducing apparatus. In this case as well, while both methods of consolidating and multiplexing the motion vector and the method of multiplexing the motion vector without consolidation are feasible, the method of multiplexing without the consolidation requires a greater data volume but enables enhanced accuracy of the frame interpolation.

Fig. 9 is a block diagram of the recording apparatus with the frame thinning, the MV consolidation, and the motion blur. This recording apparatus has the configuration of the recording apparatus shown in Fig. 8 with the motion-blur adding unit 310 added thereto.

The motion-blur adding unit 310 reads out the video recorded in the memory 302, calculates the motion blur from the motion vector integrated by the MV integrating unit 601, and adds the calculated motion blur to the video read-out. The video with the motion blur added thereto is output to the video encoder 304 in the same manner as in Fig. 1. The encoded video and motion vector are processed in the same manner as in Fig. 1.

Fig. 10 is a block diagram of the recording apparatus that multiplexes and records the motion vector integrated by the MV integrating unit 601. In this recording apparatus, the motion vectors calculated by the MV calculating unit 303 of the recording apparatus shown in Fig. 9 are subjected to integration processing by the MV integrating unit 601 and then the encoding and multiplexing processing.

Namely, in Fig. 9, the motion vector calculated by the MV calculating unit 303 is sent to the MV encoder 305 and at the same time is sent to the MV integrating unit 601. The motion vector before the integration is the subject of processing. In Fig. 10, the motion vector calculated by the MV calculating unit 303 undergoes the integration processing at the MV integrating unit 601. Then, the integrated motion vector is sent to the MV encoder 305 and at the same time is sent to the motion-blur adding unit 310. Namely, the motion vector after integration is processed at the MV encoder 305.

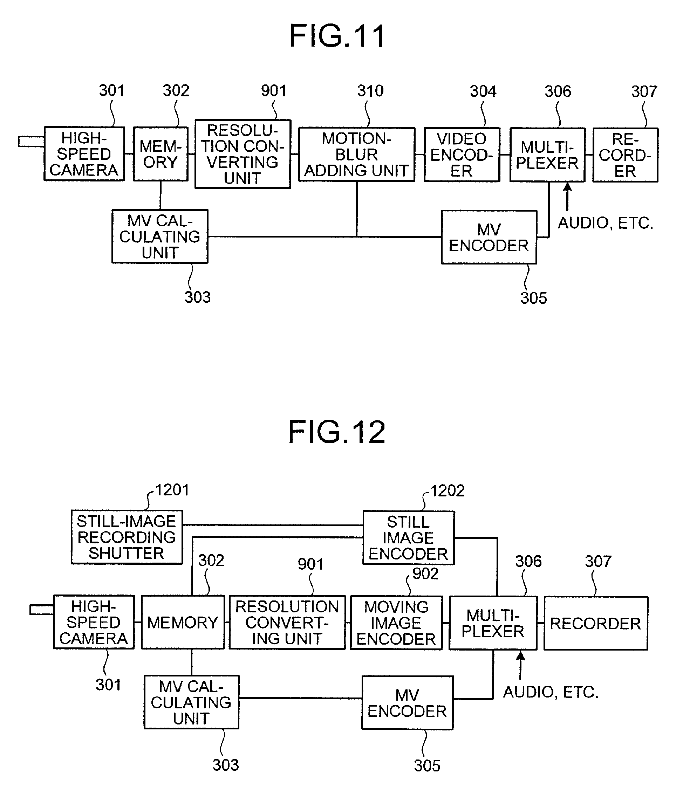

Fig. 11 is a block diagram of a configuration of the recording apparatus that records the video after resolution converting processing. This recording apparatus has the configuration of the recording apparatus shown in Fig. 1 with a resolution converting unit 901 and the motion-blur adding unit 310 added thereto.

The resolution converting unit 901 reads out the video recorded in the memory 302 and converts the resolution thereof. After the resolution converting processing, the motion-blur adding unit 310 adds the motion blur to the video based on the motion vector read out from the MV calculating unit 303. The motion-blur adding unit 310 is not essential and when it is desired to add the motion blur at the time of recording, the processing is executed at the motion-blur adding unit 310. However, when it is not necessary to add the motion blur at the time of recording because, for example, the reproducing apparatus is configured to add the motion blur, configuration may be such that the video processed at the resolution converting unit 901 is directly output to the video encoder 304 without provision of the motion-blur adding unit 310. Then, the processing of the encoded video and the encoded motion vector is executed in the same manner as in other configurations of recording apparatus.

Fig. 12 is a block diagram of a configuration of the recording apparatus using a still-image recording shutter. This recording apparatus has the configuration of the recording apparatus shown in Fig. 1 less the video encoder 304 and additionally includes the resolution converting unit 901, a moving image encoder 902, a still-image recording shutter 1201, and a still image encoder 1202.

The resolution converting unit 901 converts the resolution of the video read out from the memory 302. Since the resolution of the moving image may be lower than that of the still image in many cases, the resolution converting unit 901 lowers the resolution of the moving image if necessary. The video with the lowered resolution is output to the moving image encoder 902. The moving image encoder 902 encodes the resolution-converted image as a moving image. The encoded moving image is output to the recorder 307 by way of the multiplexer 306. If the resolution of the moving image does not require lowering, the resolution converting unit may be excluded.

The still-image recording shutter 1201 is a shutter used in recording the shot image as a still image. The still image encoder 1202, upon input specifying the image from the still-image recording shutter 1201, encodes the video read out from the memory 302 as a still image. The encoded still image is output to the recorder 307 by way of the multiplexer 306.

In this manner, the recording apparatus of Fig. 12, after shooting using the high-speed camera and obtaining the motion vector, performs resolution conversion as necessary and records the image in the case of a moving image and records only the frame at which the still-image recording shutter is depressed in the case of a still image.

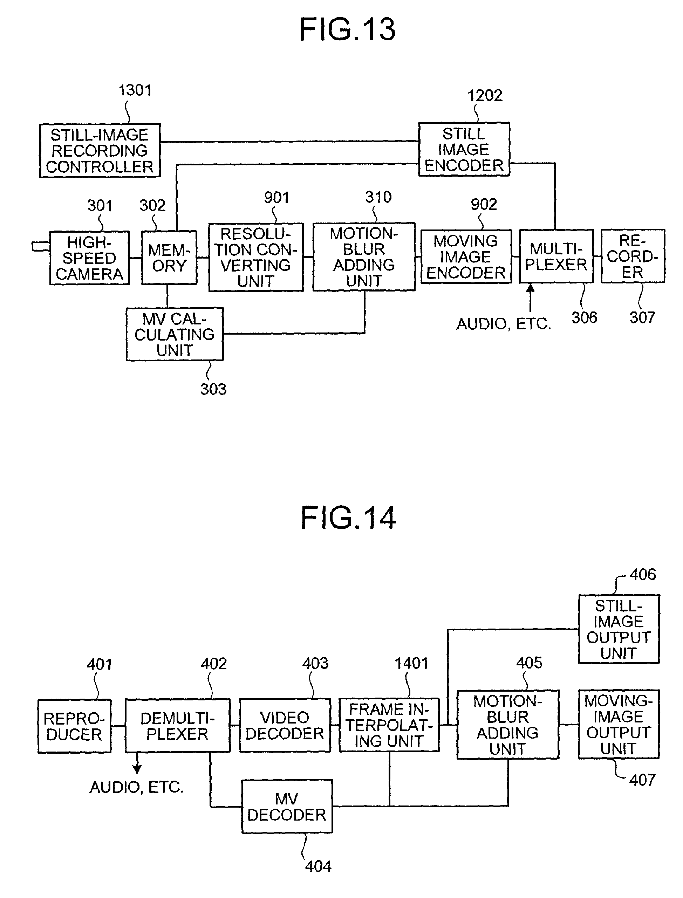

Like Fig. 2, Fig. 13 is a block diagram of a configuration of the recording apparatus that is capable of encoding the moving image having compatibility with the conventional reproducing system. This recording apparatus has the configuration of the recording apparatus shown in Fig. 1 less the video encoder 304 and the MV encoder 305 and additionally includes the resolution converting unit 901, the motion-blur adding unit 310, the moving image encoder 902, a still image recording controller 1301, and the still image encoder 1202.

The resolution converting unit 901 reads out the shot image from the memory 302 and converts the resolution of the image. The converted image is output to the motion-blur adding unit 310. The motion-blur adding unit 310, using the motion vector output from the MV calculating unit 303, adds motion blur to the image having a resolution converted at the resolution converting unit 901. The moving image encoder 902 encodes the image having the motion blur added thereto as a moving image. The encoded moving image is output to the recorder 307 by way of the multiplexer 306.

The still image recording controller 1301 specifies, for example, intermittent recording of a still image. In this case, the motion vector is not recorded or configuration may be such that the motion vectors are integrated and recorded as a new vector for the purpose of using the motion vector for the image interpolation between the still images in the reproducing apparatus. The still image recording controller 1301 may be the still-image recording shutter. In such case, the motion vector does not need to be recorded.

The still image encoder 1202 encodes the image read out from the memory 302 as a still image. The still image encoder 1202, upon input from the still image recording controller 1301, encodes the still image according to the content of the instruction. The encoded still image is output to the recorder 307 by way of the multiplexer 306.

In the recording apparatus of Fig. 13, after the shooting using the high-speed camera and the calculation of the motion vector, by recording the still image directly or only necessary frames of the still image, and recording the moving image with the motion blur added thereto, the moving image encoding method may be kept compatible with the conventional reproducing system.

### (Reproducing Apparatus)

Fig. 14 is a block diagram of the reproducing apparatus that executes frame interpolation processing. This reproducing apparatus has the configuration of the reproducing apparatus shown in Fig. 3 and further includes a frame interpolating unit 1401. The frame interpolating unit 1401 performs the frame interpolation so that the video after the frame thinning processing may be reproduced with the original frames. This frame interpolating unit 1401, according to the motion vector decoded by the MV decoder 404, performs the frame interpolation on the video decoded by the video decoder 403. In this case, the motion vector must correspond to the original frames before the thinning out. The frame-interpolated video is output to the still-image output unit 406 in the case of a still image and to the motion-blur adding unit 405 in the case of a moving image.

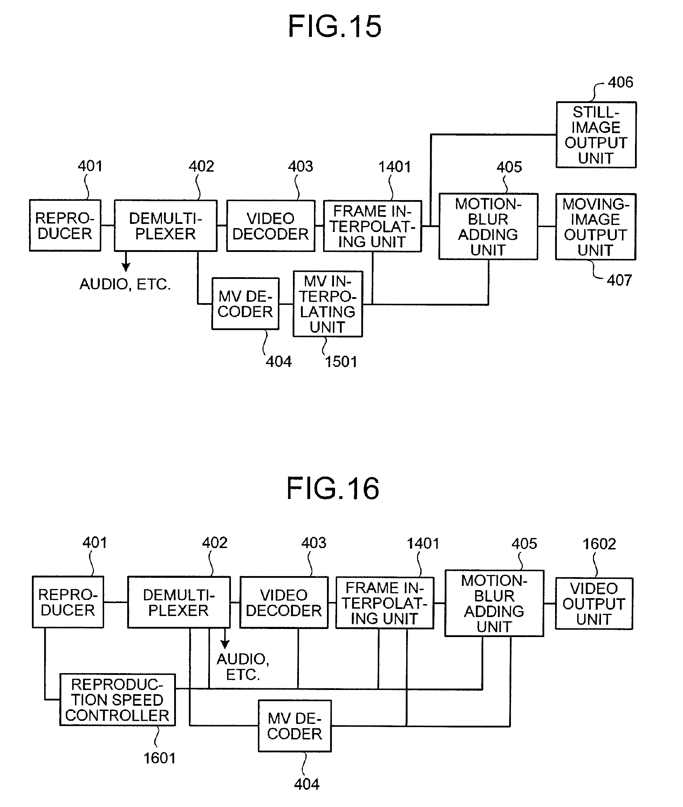

Fig. 15 is a block diagram of the reproducing apparatus that executes motion vector interpolating processing. This reproducing apparatus has the configuration of the reproducing apparatus shown in Fig. 14 and further includes an MV interpolating unit 1501 and corresponds to the recording apparatus that records after thinning out the motion vector in the same manner as with the video. The MV interpolating unit 1501 interpolates the motion vector decoded by the MV decoder 404. The interpolated motion vector corresponds to the original frames before the thinning-out and is output to the frame interpolating unit 1401 and the motion-blur adding unit 405 in the same manner as in the reproducing apparatus shown in Fig. 14. By such configuration, the reproducing apparatuses shown in Figs. 14 and 15 are capable of smoothly reproducing the video by adding the motion blur after the frame interpolation using the motion vector.

In Figs. 14 and 15, configuration may be such that the input to the still-image output unit 406 is taken from the video decoder 403 instead of the frame interpolating unit 1401. In the case of the reproducing apparatus corresponding to the recording apparatus having the motion-blur adding unit as shown in Fig. 2, the motion-blur adding unit 405 becomes unnecessary.

Fig. 16 is a block diagram of the configuration of the reproducing apparatus that realizes high-definition, slow reproduction. This reproducing apparatus has the configuration of the reproducing apparatus shown in Fig. 3 less the still-image output unit 406 and the moving-image output unit 407 and further includes the frame interpolating unit 1401, a video output unit 1602, and a reproduction speed controller 1601.

The frame interpolating unit 1401 performs the frame interpolation on the decoded video output from the video decoder 403. The frame interpolating unit 1401 executes the interpolation not only based on the frames input from the video decoder but also based on the motion vector from the MV decoder 404.

The video output unit 1602 reproduces the video having the motion blur added thereto at the motion-blur adding unit 405. The reproduction speed controller 1601, by inputting a speed control signal to the reproducer 401, demultiplexer 402, the video decoder 403, the frame interpolating unit 1401, and the motion-blur adding unit 405, respectively, controls the operation speed of each unit, thereby controlling the reproduction speed.

Since the reproduction speed may be controlled by the reproduction speed controller 1601 as described above, the video reproduction speed may also be decreased, thereby realizing slow video reproduction. On the other hand, with respect to a decrease in the number of frames to be displayed per unit time due to the slow reproduction, since the frames are interpolated by the frame interpolating unit 1401, the slowly reproduced video may be viewed without an unnatural feeling. The motion blur is added to the slowly reproduced video by the motion-blur adding unit 405 according to the motion vector decoded by the MV decoder 404, thereby enabling smoothly moving video to be output from the video output unit 1602.

The reproducing apparatus of Fig. 16 described above enables an interpolated image of high image quality to be obtained by performing the frame interpolation using the motion vector calculated with high accuracy at the recording apparatus. Using this, high-definition, slow reproduction may be made seamlessly from the still image having little motion blur to a smoothly moving image.

High-definition, slow reproduction is feasible if the motion vector corresponding to the interpolated frames is obtained with high accuracy in any one of the cases i) to iii) below:
i) shooting at a high frame rate and recording the image with the frames thinned out to the ordinary moving image reproduction rate;
ii) shooting at the ordinary moving image reproduction frame rate and directly recording the image; and
iii) recording the image with the frames thinned out to less than the ordinary frame rate.

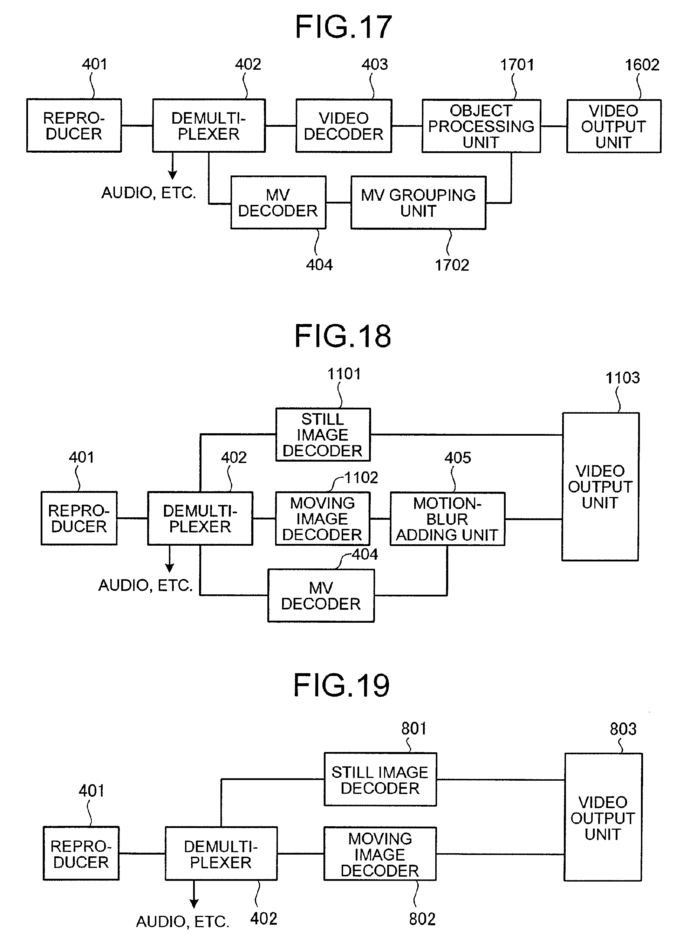

Fig. 17 is a block diagram of the configuration of the reproducing apparatus that realizes reproduction by object. This reproducing apparatus has the configuration of the reproducing apparatus shown in Fig. 3 less the motion-blur adding unit 405, the still-image output unit 406, and the moving-image output unit 407 and further includes an MV grouping unit 1702, an object processing unit 1701, and the video output unit 1602.

The MV grouping unit 1702 groups the motion vectors decoded by the MV decoder 404 and outputs the grouped motion vectors to the object processing unit 1701. The object processing unit 1701, upon input of the grouped motion vectors output from the MV grouping unit 1702, executes recognition, tracking, and separation of the objects contained in the video output from the video decoder 403. The object processing unit 1701 is also capable of executing color processing with respect to the obtained objects and of executing object substitution processing. The video output unit 1602 reproduces the video output from the object processing unit 1701.

In this manner, with respect to the motion vectors decoded by the MV decoder 404, vectors of similar motion are grouped by the MV grouping unit 1702. Therefore, the objects of similar motion vectors may be separately processed by the object processing unit 1701.

Furthermore, by shooting at the high speed in the recording apparatus, the pixel-by-pixel motion such as the optical flow may be obtained accurately. Further, by analyzing the pixel-by-pixel motion, the accuracy in estimating the object distance and recognizing the object is enhanced, enabling the stereopsis, separate processing by object, object substitution processing, etc. Such processing may be performed simultaneously with the ordinary moving image shooting.

According to the reproducing apparatus of Fig. 17 described above, since the motion vectors are obtained with high accuracy by, for example, grouping similar motion vectors, the recognition, tracking, and separation of the objects may be performed. Therefore, processing such as color and brightness adjustment by object and substitution of one object with another may be performed.

Fig. 18 is a block diagram of the reproducing apparatus corresponding to the recording apparatus that does not have the motion-blur adding unit and encodes the still image by a separate encoder and multiplexes as shown in Fig. 12. This reproducing apparatus has the configuration of the reproducing apparatus shown in Fig. 3 in which the video decoder 403 is replaced by a moving image decoder 1102, the still-image output unit 406 and the moving-image output unit 407 are replaced by a video output unit 1103, and a still image decoder 1101 is further included.

The still image decoder 1101 decodes the still image demultiplexed by the demultiplexer 402. The decoded still image is output to the video output unit 1103. The moving image decoder 1102 decodes the moving image demultiplexed by the demultiplexer 402, while the MV decoder 404 decodes the motion vector. The motion-blur adding unit 405 adds motion blur to the moving image and outputs the moving image to the video output unit 1103. The video output unit 1103 reproduces the input still image or moving image.

The reproducing apparatus of Fig. 18 described above is capable of reproducing by adding the motion blur according to the direction of motion and the amount of motion indicated by the motion vector at the time of reproduction of the moving image and of reproducing a high-resolution still image at the time of reproduction of the still image.

Fig. 19 is a block diagram of the reproducing apparatus corresponding to the recording apparatus that has the motion-blur adding unit and encodes the still image by the separate encoder and multiplexes as shown in Fig. 13. This reproducing apparatus includes the reproducer 401 and the demultiplexer 402 of the reproducing apparatus shown in Fig. 3 as well as the still image decoder 801, the moving image decoder 802, and the video output unit 803.

When a still image is output from the demultiplexer 402, the still image decoder 801 decodes the still image and outputs the decoded still image to the video output unit 803. When a moving image is output from the demultiplexer 402, the moving image decoder 802 decodes the moving image and outputs the decoded moving image to the video output unit 803. The video output unit 803 reproduces the still image output from the still image decoder 801 or the moving image output from the moving image decoder 802.

In the recording apparatus to which the reproducing apparatus of Fig. 19 described above corresponds, the still image of high image quality with little motion blur as obtained by the high-speed camera is to be multiplexed in a user area, etc. On the other hand, the moving image, after resolution conversion, as required, and the addition of the motion blur according to the direction of motion and the amount of motion indicated by the motion vector, is to be multiplexed in an area that may be reproduced by the conventional reproducing apparatus. This enables the ordinary moving image to be reproduced in the conventional reproducing apparatus and the still image of high image quality with little motion blur, as well as the ordinary moving image, to be reproduced in the reproducing apparatus of Fig. 19 corresponding to this recording apparatus.

In this manner, reproduction of the still image with high image quality can be performed while maintaining the compatibility with the conventional moving image reproducing apparatus. If configuration is such that, in the recording apparatus, the still image is intermittently recorded and the motion vector between the still images is also recorded, the corresponding reproducing apparatus, if equipped with the MV decoder, can reproduce a high-resolution, moving image or pseudo moving image using the still images.

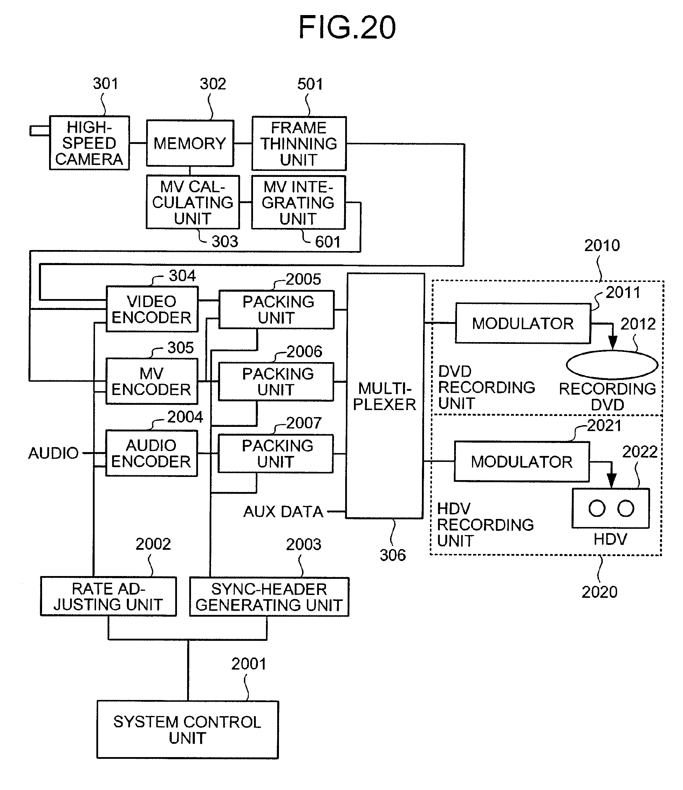

Fig. 20 is a block diagram of the configuration of the recording apparatus as applied to a DVD video camera or an HDV camera. This recording apparatus has the configuration of the recording unit shown in Fig. 8, in which the recorder 307 thereof is replaced by a DVD recording unit 2010 and an HDV recording unit 2020 and a system control unit 2001, a rate adjusting unit 2002, a sync-header generating unit 2003, an audio encoder 2004, and packing units 2005 to 2007 are further included. Description of an example of application of the recording apparatus to the DVD video camera/HDV camera is made with reference to Fig. 20.

In this recording apparatus, the MV calculating unit 303 calculates the motion vectors with high accuracy with respect to the video obtained from the high-speed camera 301. The MV integrating unit 601 integrates the motion vectors corresponding to the rate of the frame thinning by the frame thinning unit 501. The video encoder 304 and the MV encoder 305 encode the frame-thinned video and the integrated motion vector, respectively. Here, MPEG is to be used for the video encoding and the integrated motion vector is utilized for the video encoding.

In such utilization, while the motion vector is stored in a video data recording area as the motion information, configuration may be such that data such as the motion vector data that cannot be stored in the video data recording area and the motion vector corresponding to an arbitrary shape change obtained from the optical flow is packed by the packing unit 2006, separately from the video data, and recorded as a private stream.

The system control unit 2001 controls the bit rate adjustment of the video data and the audio data, if necessary, to respond to an increased amount of data due to the recording of additional motion vector data. The rate adjusting unit 2002, under control of the system control unit 2001, controls the rate of the video encoder 304, the MV encoder, and the audio encoder 2004. The sync-header generating unit 2003, under control of the system control unit 2001, generates the sync header and outputs the sync header to the packing units 2005 to 2007.

Meanwhile, the audio encoder 2004 encodes input audio. The video encoder 304, the MV encoder 305, and the audio encoder 2004, under rate adjustment by the rate adjusting unit 2002, output the encoded data, respectively. The packing units 2005 to 2007, upon receipt of the sync header output from the sync-header generating unit 2003, execute the packing of the encoded data, namely, add a packet header for synchronization, and output the packed data, together with AUX data, to the multiplexer 306.

The multiplexer 306 multiplexes the packed data and outputs the multiplexed data to the DVD recording unit 2010 for recording on a recording DVD 2012 and to the HDV recording unit 2020 for recording on an HDV 2022.

Thereafter, the DVD recording unit 2010 performs modulation at a modulator 2011 and records the data on the recording DVD 2012. The recording DVD 2012 is a recordable DVD (digital video disc). The HDV recording unit 2020 performs the modulation at the modulator and records the data on the HDV 2022. The HDV medium 2022 is a medium capable of recording the HDV-standard video.

The recording apparatus of Fig. 20 described above, which records the video with little motion blur and the high-accuracy motion vector, can realize, in the DVD video camera or the HDV camera, the reproduction of a still image with little motion blur or a smoothly moving image containing the motion blur. Furthermore, the high accuracy of the motion vector enables recording with higher image quality at the same bit rate as the conventional technology or recording for a longer period at the same level of image quality as the conventional technology.

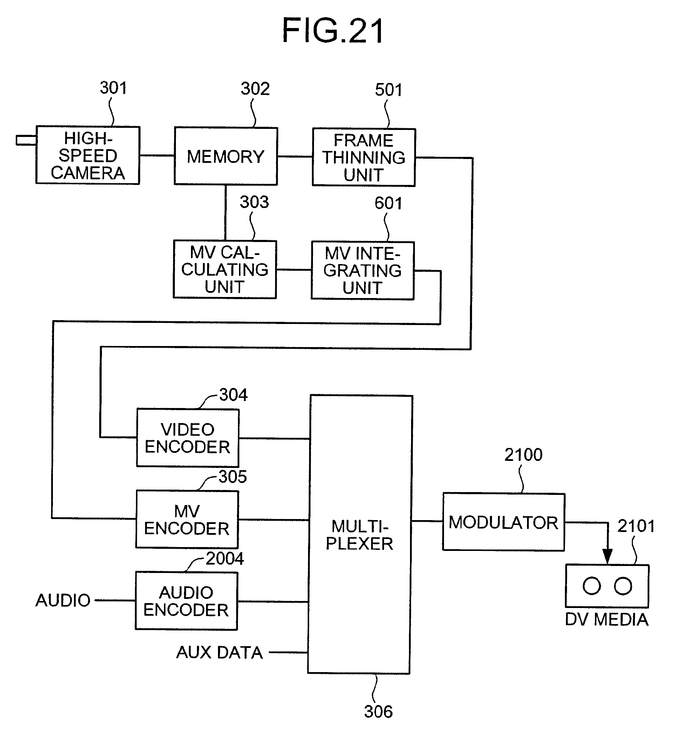

Fig. 21 is a block diagram of the configuration of the recording apparatus as applied to a DV camera. This recording apparatus has the configuration of the recording apparatus shown in Fig. 8 and further includes the audio encoder 2004, the modulator 2100, and a DV medium 2101. Description of an example application of the recording apparatus to the DV (digital video) camera is made with reference to Fig. 21.

In the same manner as the video encoder 304 encodes the video and the MV encoder encodes the motion vector, the audio encoder 2004 encodes the input audio and then, the encoded data is input respectively to the multiplexer 306. The multiplexer 306, to which not only the audio but also the video and the motion vector are input, multiplexes and outputs them to the modulator 2100. According to DV standards, the motion vector is not used for the video encoding.

The highly accurate motion vectors obtained from the high-speed camera video are integrated at the MV integrating unit 601 corresponding to the frame thinning rate. Then, the integrated motion vector, after encoding, is packed separately from the video data and multiplexed to the video data and the audio data at the multiplexer 306, using an additional data area or an unused, reserved area. Then, the data is modulated at the modulator 2100 and recorded on the DV medium 2101. The DV medium 2101 is a medium capable of recording DV-standard video.

The recording apparatus of Fig. 21 described above, which records the video with little motion blur and the high-accuracy motion vector, can realize, in the DV camera, the reproduction of a still image with little motion blur or a smoothly moving image including the motion blur.

The encoding and multiplexing of the motion vector in the present invention includes the encoding and the multiplexing of the motion vector in video encoding such as MPEG. Each embodiment is not intended to limit the present invention and constituent elements described in embodiments may be combined and a wide variety of examples may be made by combination. For example, recording may be performed by executing the resolution conversion of Fig. 11 and the frame thinning-out of Fig. 9 at the same time.

The method explained in above can be implemented by a computer such as a personal computer and a workstation executing a program that is prepared in advance. The program is recorded on a computer-readable recording medium such as a hard disk, a flexible disk, a CD-ROM, an MO, and a DVD, and is executed by being read out from the recording medium by a computer. The program can be a transmission medium that can be distributed through a network such as the Internet.

## Claims

1. A recording apparatus comprising:
a shooting unit that continuously shoots a series of images at a high shutter speed;
a calculating unit that calculates motion vectors based on a sequential relationship of the series of images shot by the shooting unit; and
a recording unit that records the series of images shot by the shooting unit together with the motion vectors corresponding to the images.

2. The recording apparatus according to claim 1, comprising a frame thinning unit that thins out frames from the series of images.

3. The recording apparatus according to claim 2, comprising a motion vector integrating unit that integrates the motion vectors corresponding to the frames thinned-out, wherein
the recording unit records the series of images together with the integrated motion vectors.

4. The recording apparatus according to any one of claims 1 to 3, comprising a resolution converting unit that converts a resolution of the series of images.

5. The recording apparatus according to claim 1, comprising an encoding unit that encodes the series of images, using the calculated motion vectors.

6. The recording apparatus according to claim 5, wherein
the encoding unit multiplexes, together with the series of images, the motion vectors as a part of encoded data for the series of images.

7. The recording apparatus according to claim 1, comprising a control unit that controls a timing of recording a still image among images included in the series of images.

8. A recording apparatus comprising:
a shooting unit that continuously shoots a series of images at a high shutter speed;
a calculating unit that calculates motion vectors based on a sequential relationship of the series of images shot by the shooting unit;
an adding unit that obtains motion blur based on the motion vectors calculated by the calculating unit and adds the motion blur to the series of images shot by the shooting unit; and
a recording unit that records the series of images having the motion blur added thereto by the adding unit.

9. The recording apparatus according to claim 8, wherein
the recording unit records the motion vectors together with the series of images having the motion blur added thereto.

10. The recording apparatus according to claim 8 or 9, comprising a frame thinning unit that thins out frames from the series of images.

11. The recording apparatus according to claim 10, comprising a motion vector integrating unit that integrates the motion vectors corresponding to the frames thinned-out, wherein the recording unit records the series of images together with the integrated motion vectors.

12. The recording apparatus according to claim 8, comprising a resolution converting unit that converts a resolution of the series of images.

13. The recording apparatus according to claim 8, comprising an encoding unit that encodes the series of images, using the calculated motion vectors.

14. The recording apparatus according to claim 8, wherein
the encoding unit multiplexes, together with the series of images, the motion vectors as a part of encoded data for the series of images.

15. The recording apparatus according to claim 8, comprising a control unit that controls a timing of recording a still image among images included in the series of images.

16. A reproducing apparatus that reproduces a series of images recorded by the recording apparatus according to any one of claims 1 to 7, the reproducing apparatus comprising:
an adding unit that adds motion blur based on motion vectors recorded by the recording apparatus to the series of images recorded by the recording apparatus.

17. The reproducing apparatus according to claim 16, comprising a frame interpolating unit that interpolates frames based on the motion vectors.

18. The reproducing apparatus according to claim 17, comprising a motion vector interpolating unit that interpolates the motion vectors.

19. The reproducing apparatus according to any one of claims 16 to 18, comprising a speed control unit that controls the speed of reproducing the series of images.

20. A reproducing apparatus that reproduces a series of images recorded by the recording apparatus according to any one of claims 1 to 7 and claims 9 to 15, the reproducing apparatus comprising:
a grouping unit that groups the motion vectors recorded by the recording apparatus; and
a processing unit that performs processing by object, the object corresponding to the grouped motion vectors.

21. A reproducing apparatus that reproduces a series of images recorded by the recording apparatus according to claim 7, the reproducing apparatus comprising:
a first reproducing unit that reproduces a still image recorded by the recording apparatus; and
a second reproducing unit that reproduces the series of images recorded by the recording apparatus as a moving image, by adding thereto motion blur based on the motion vectors recorded by the recording apparatus.

22. A reproducing apparatus that reproduces a series of images recorded by the recording apparatus according to claim 15, the reproducing apparatus comprising:
a first reproducing unit that reproduces a still image recorded by the recording apparatus; and
a second reproducing unit that reproduces the series of images recorded by the recording apparatus as a moving image.

23. A recording method comprising:
a shooting step of continuously shooting a series of images at a high shutter speed;
a calculating step of calculating motion vectors based on a sequential relationship of the series of images shot at the shooting step; and
a recording step of recording the series of images shot at the shooting step together with the motion vectors corresponding to the images.

24. A recording method comprising:
a shooting step of continuously shooting a series of images at a high shutter speed;
a calculating step of calculating motion vectors based on a sequential relationship of the series of images shot at the shooting step;
an adding step of obtaining motion blur based on the motion vectors calculated at the calculating step and adding the motion blur to the series of images shot at the shooting step; and
a recording step of recoding the series of images having the motion blur added thereto at the adding step.

25. A recording program that causes a computer to execute the recording method according to claim 23 or 24.

26. A computer-readable recording medium storing therein the recording program according to claim 25.
